# EUROPÄISCHE PATENTSCHRIFT

(11) **EP 3 722 915 B1**
(45) Veröffentlichungstag und Bekanntmachung des Hinweises auf die Patenterteilung: **15.06.2022**
(21) Anmeldenummer: 20166563.5
(22) Anmeldetag: 14.01.2019
(51) Int. Cl.: G05D 23/13

(54) **MISCHBATTERIEKARTUSCHE**
MIXING BATTERY CARTRIDGE
CARTOUCHE DE ROBINET MÉLANGEUR

(30) Priorität: 19.01.2018 AT 500432018
(43) Veröffentlichungstag der Anmeldung: 14.10.2020
(62) Teilanmeldung aus: 19151624.4
(73) Patentinhaber: Gustav Schmiedl Armaturenfabrik Gesellschaft m.b.H. & Co. Kommanditgesellschaft, 6020 Innsbruck (AT)
(72) Erfinder: ANKER, Oliver, 6075 Tulfes (AT)
(74) Vertreter: Torggler & Hofmann Patentanwälte - Innsbruck

(56) Entgegenhaltungen:
- EP-A1- 0 611 260
- WO-A1-2014/033678

## Beschreibung

Die Erfindung betrifft eine Mischbatteriekartusche mit einem Gehäuse, in dem ein in der Länge veränderbares thermostatisches Element vorgesehen ist, mit einem verdrehbaren Einstellglied für die Temperatur des abfließenden Mischwassers, wobei die Verdrehung des Einstellgliedes einen Anschlag axial verstellt, um den Aufnahmeraum des thermostatischen Elements an die zur gewählten Temperatur des Mischwassers zugehörige Länge anzupassen.

Für Mischbatterien oder Mischarmaturen für Kalt- und Heißwasser sind Einsatzelemente, sogenannte Kartuschen, in verschiedenen Ausführungen bekannt. Mithilfe dieser Einsatzelemente kann eine gewünschte Mischwassertemperatur vorgewählt werden, wobei sich durch den Anteil des Heißwassers die Länge eines thermostatischen Elements einstellt. Von dieser Länge werden dann die Eintrittsquerschnitte des Kaltwasser und Heißwassers gesteuert und ein Mischwasser mit der gewünschten Temperatur erzeugt.

Eine Mischbatteriekartusche der eingangs genannten Art ist beispielsweise aus der WO 2005/054971 bekannt. Das im Gehäuse axial gesichert verdrehbare Einstellglied ist mit einem Innengewinde versehen, in das ein ein Außengewinde bewegender Teil eines höhenverstellbaren Anschlags für das thermostatische Element eingreift. Wird das Einstellglied verdreht, so schraubt sich der Anschlag höher oder tiefer und bestimmt dadurch die Dehnungslänge des thermostatischen Elements, das einen die beiden Eintrittsquerschnitte beeinflussenden Ventilschieber bzw. Ventildoppelkegel steuert. Dabei ist der Ventilschieber in Richtung des Ventilsitzes des Kaltwassers durch eine Feder beaufschlagt. Der höhenverstellbare, ein Außengewinde tragende Anschlag weist einen Hohlraum auf, der nach unten durch einen als Kappe für das thermostatische Element dienenden Einsatz abgeschlossen ist. Die Kappe wird durch eine innere Druckfeder beaufschlagt, und kann in einen inneren Ausgleichsraum eintreten, wenn durch Längenänderung des thermostatischen Elements die Druckfeder des Anschlags komprimiert wird. Dies schützt das thermostatische Element bei Temperaturschwankungen vor Beschädigung.

Eine weitere Mischbatteriekartusche dieser Art zeigt die EP 611 260 A.

Die Mischbatteriekartusche der WO 2005/054971 weist eine relativ große Bauhöhe auf, da der Ausgleichsraum im axial verstellbaren Anschlag vorgesehen ist und in jeder Stellung des Anschlags in gleichbleibender Tiefe vorhanden ist. Der Ausgleichraum im Anschlag wandert also bei dessen Verstellung in der Verstellachse, also in der Höhe, mit.

Die Erfindung hat es sich nun zur Aufgabe gestellt, bei etwa gleich bleibenden Eigenschaften eine derartige Mischbatteriekartusche mit minimaler Bauhöhe zu schaffen, wodurch bei engen Platzverhältnissen die Montage und die Bedienung erleichtert wird, und die Mischbatterie optisch gefälliger gestaltet ist. Dabei wird von der Überlegung ausgegangen, dass das thermostatische Element Längenänderungen nur bei Temperaturänderungen unterliegt, und somit bei Kontakt mit Heißwasser einer maximalen Temperatur am Ende seiner Dehnungslänge angekommen ist.

Erfindungsgemäß wird die Aufgabe nun in einer ersten Ausführung durch die Merkmale des Anspruchs 1 gelöst.

Ebenso wird diese Aufgabe dadurch gelöst, dass der Aufnahmeraum einen Ausgleichsraum für temperaturabhängige Längenschwankungen des thermostatischen Elements einschließt, dessen axiale Erstreckung sich bis zur maximalen Temperatur des abfließenden Wassers gegen Null verringert. Durch diese Anordnung sind Gehäuse, Einstellglied und Anschlag innig ineinander verschachtelt und der Anschlag verstellt sich nicht nur relativ zum Gehäuse sondern auch zum Temperatureinstellglied. Der Ausgleichraum für Längenschwankungen des thermostatischen Elements liegt innerhalb des Verstellraums für den Anschlag.

Sowohl der Ausgleichsraum als auch der Verstellraum werden entsprechend der steigenden Temperatur des Mischwassers kleiner, wobei bei ausschließlichem Heißwasserzutritt sowohl der Anschlag als auch das maximal gedehnte thermostatische Element an der Innenseite des Einstellglieds anliegen können.

In einer bevorzugten Ausführung ist vorgesehen, dass das Innengewinde im Gehäuse vorgesehen ist, und der auf dem Einstellglied drehgesichert axial verstellbare Anschlag das Außengewinde aufweist. Auch dies trägt zur Reduktion der Bauhöhe bei, da das Innengewinde sich im Gehäuse über einen längeren Bereich erstrecken kann, der bis an die Mischkammer für das Wasser heranreichen kann.

Es ist zwar denkbar, dass das thermostatische Element einen internen Ausgleich für Längenschwankungen aufweist. Übliche thermostatische Elemente können aber Längenschwankungen nicht selbst aufnehmen, sodass in einer weiteren bevorzugten Ausführung der Anschlag zwei ineinander bewegliche Teile umfasst, die durch eine Druckfeder gegeneinander verspannt sind.

Nachstehend wird nun die Erfindung anhand der beiliegenden Figuren näher beschrieben, ohne darauf beschränkt zu sein.

Alle Figuren zeigen einen Längsschnitt durch eine Mischbatteriekartusche und zwar:
- Fig. 1: die Kartusche mit offenen Zuflussleitungen und mit dem Einstellglied in Kaltwasserstellung,
- Fig. 2: die Kartusche mit geschlossenen Zuflussleitungen und mit dem Einstellglied in Heißwasserstellung,
- Fig. 3: die Kartusche mit offenen Zuflussleitungen und mit dem Einstellglied in Heißwasserstellung,
- Fig. 4: die Kartusche mit offenen Zuflussleitungen und mit dem Einstellglied in einer mittleren Stellung für mittlere Wassertemperatur, und
- Fig. 5: die Kartusche mit offenen, aber vertauschten Zuflussleitungen und mit dem Einstellglied in Kaltwasserstellung.

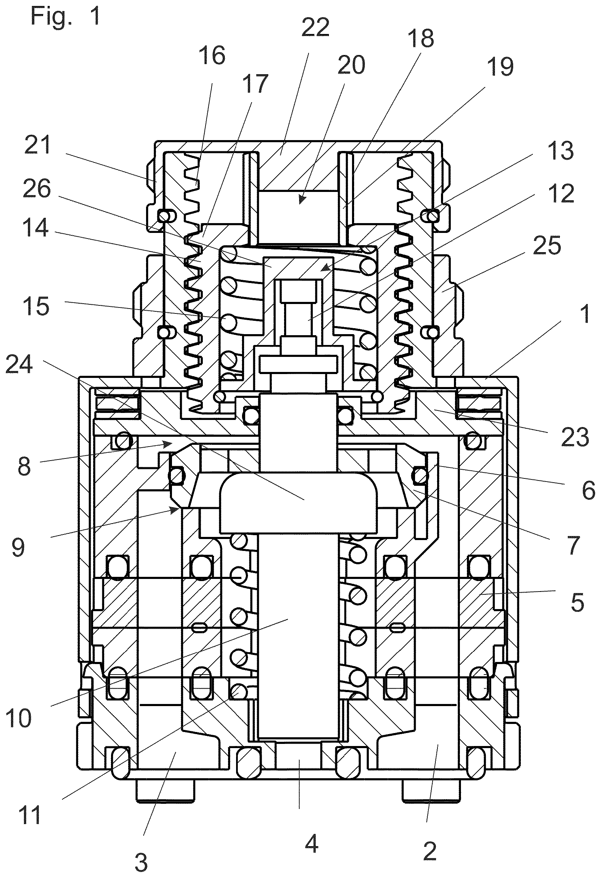

Die Figuren 1 bis 4 zeigen eine Mischbatteriekartusche mit einem Gehäuse 1, bei der der Kaltwasserzufluss 2 unten rechts und der Heißwasserzufluss 3 unten links vorgesehen sind. Mittig ist der Mischwasserabfluss 4 vorgesehen, der mit den Zuflüssen 2 und 3 in Verbindung steht und in dem ein thermostatisches Element 10 umspült wird.

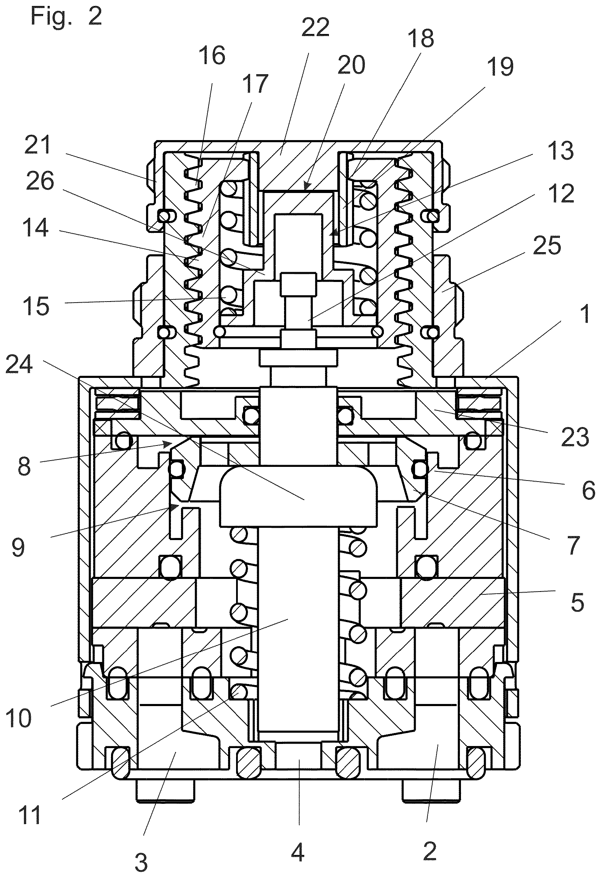

Die beiden Zuflüsse 2 und 3 sind in Figur 1 geöffnet und in Figur 2 gesperrt, wobei eine verdrehbare Absperrscheibe 5 mittels des Rings 25 verdreht wird. Zischen dem Ring 25 und der Absperrscheibe 5 erstreckt sich zumindest ein in den Figuren 1 und 2 nicht sichtbarer Verbindungsteil.

Das thermostatische Element 10 ist mit einem Mittelstück 24 versehen, dessen Durchmesser gegenüber dem unteren Ende vergrößert ist, an dessen Unterseite sich über einen nicht gezeigten Federteller eine im Mischwasserabfluss 4 liegende Druckfeder 11 abstützt, und an dessen Oberseite eine Dichtscheibe 7 aufliegt, die mit zwei Ventilsitzen zusammenwirkt. Die Dichtscheibe 7 wird in einer zylindrischen Ausnehmung geführt, die in einer mit der Absperrscheibe 5 verdrehbaren Scheibe 6 ausgebildet ist. Dabei erstreckt sich der Kaltwasserzufluss 2 durch die Scheibe 6 nach oben, während der Heißwasserzufluss 3 auf Höhe der Unterseite der Dichtscheibe 7 endet.

Das thermostatische Element 10 durchragt abgedichtet eine zentrale Öffnung eines etwa in mittlerer Höhe der Kartusche angeordneten Trennteils 23, wobei der Abschnitt des thermostatischen Elements 10 oberhalb des Trennteils 23 ein in Längsrichtung unter Temperaturschwankungen sich änderndes Dehnelement 12 darstellt. Temperaturerhöhungen im Mischwasserabfluss 4 verlängern also das Dehnelement 12 nach oben. Die Oberseite des Dehnelements 12 liegt an einem Anschlag 13 an, dessen Höhe über ein verstellbares Temperatureinstellglied 21 verändert werden kann.

Der Anschlag 13 ist mehrteilig ausgebildet und umfasst ein hutartiges Element 26, eine Druckfeder 15 und eine Hülse 14, an der ein Außengewinde 17 vorgesehen ist. Die Hülse 14 greift mit dem Außengewinde 17 in ein Innengewinde 16, das im oberen Teil der Kartusche im Gehäuse 1 vorgesehen ist.

Wenn bei jeder eingestellten Position des Temperatureinstellgliedes 21 das Dehnelement 12 Längenschwankungen selbst ausgleichen kann oder andere Ausgleichsmöglichkeiten vorgesehen sind, können die Hülse 14 und das hutartige Element 26 zu einem einstückig ausgebildeten Anschlag 13 zusammen gefasst sein, wodurch sich die Druckfeder 15 erübrigt.

In den in den Figuren dargestellten bevorzugten Ausführungen mit mehrteiligem Anschlag 13 dient das verstellbare Temperatureinstellglied 21 als oberer Abschluss des Gehäuses 1, und weist einen mittigen inneren Vorsprung 22 auf, von dem eine Zahnwelle 19 nach unten ragt. Die Zahnwelle 19 kämmt mit einer oberen Ringschulter der Hülse 14, an der sich auch die Druckfeder 15 abstützt. Die Zahnwelle 19 umschließt einen nach unten offenen Hohlraum in Verlängerung des thermostatischen Elements 10.

Figur 1 zeigt die Stellung des Anschlags 13 für die Abgabe von kaltem Wasser, wobei die Dichtscheibe 7 den unteren Eintrittsspalt 9 für Heißwasser verschlossen hält, da sie auf dem unteren Ventilsitz an der Trennscheibe 6 aufliegt. Dadurch ist der obere Einstrittsspalt 8 offen und Kaltwasser gelangt durch Durchbrüche in der Dichtscheibe 7 zum Mischwasserabfluss 4. Da das thermostatische Element 10 nur mit Kaltwasser in Berührung ist, ist die Gesamtlänge ein Minimum und der Anschlag 13 in seiner in Figur 1 gezeigten tiefsten Stellung auf dem Dehnelement 12 aufliegend.

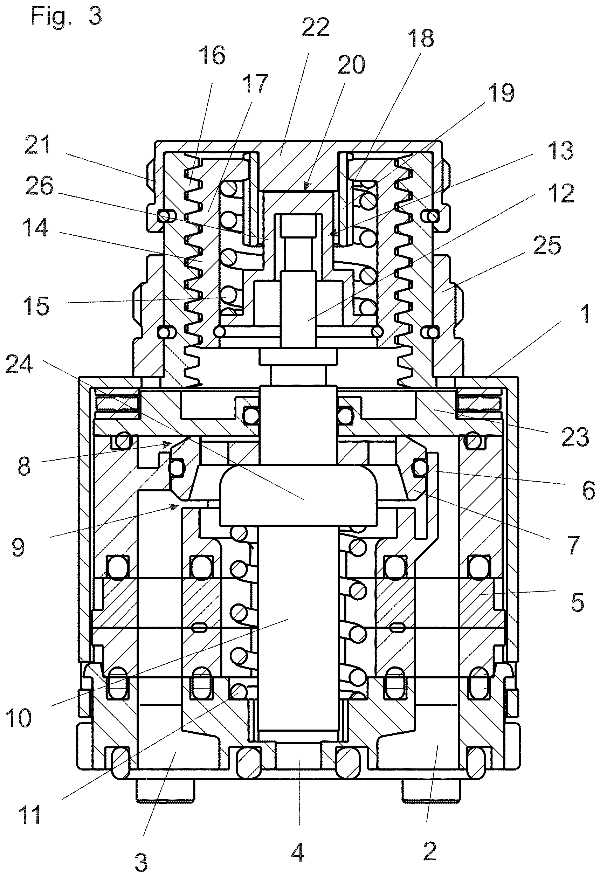

In Figur 2 ist die Absperrscheibe 5 und die Scheibe 6 verdreht und die Zuflüsse 2 und 3 sind gesperrt. Mithilfe des Temperatureinstellglieds 21, dessen Verdrehung über die Zahnwelle 19 die Hülse 14 des Anschlags 13 im Innengewinde 16 verdreht, wandert die Hülse 14 an der Zahnwelle 19 nach oben und gibt das thermostatische Element 10 frei. Dabei tritt das hutartige Element 26 des Anschlags 13 in den Hohlraum 20 ein. Dank dem Wegfall des Anschlags 13 wird das thermostatische Element 10 unter Wirkung der unteren Druckfeder 11 angehoben und die Dichtscheibe 7 gegen den oberen Ventilsitz am Trennteil 23 gedrückt. Der Spalt 8 ist dadurch geschlossen und der Spalt 9 für Heißwasser geöffnet. Wird die Absperrscheibe 5 geöffnet, so strömt Kaltwasser bis zum Trennteil 23, während Heißwasser durch den Spalt 8 in den Mischwasserabfluss 4 einströmt. Das vom Heißwasser umspülte thermostatische Element 10 erwärmt und verlängert sich auf maximale Größe, wie in Fig. 3 gezeigt, wodurch das Dehnelement 12 wieder das hutartige Element 26 des Anschlags 13 berührt. Dies ist die maximale Stellung, da ja kein heißeres Wasser vorhanden ist, und daher keine weitere Dehnung auftreten kann.

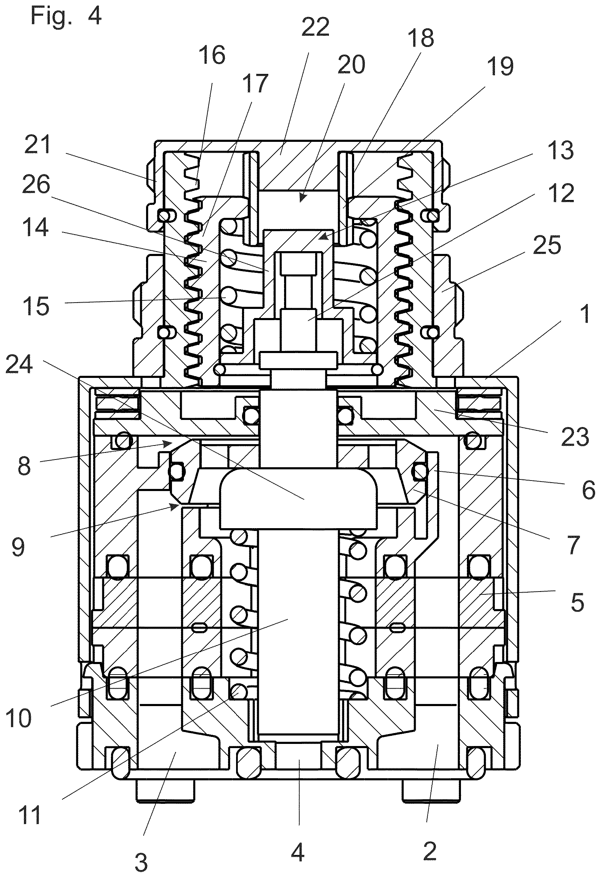

Figur 4 zeigt eine Stellung für temperiertes Mischwasser, das heißt der Anschlag 13 ist mittels des Temperatureinstellglieds 21 in einer mittleren Höhe, in der das Dehnelement 12 nur um einen kleineren Betrag gedehnt sein kann. In dieser Stellung sind beide Spalten 8, 9 offen, da sich die Dichtscheibe 7 ebenfalls in einer mittleren Stellung befindet. Je nach Höhe des Anschlags 13 ist somit ein anderes Mischungsverhältnis von Kalt- und Heißwasser gegeben, da sich die Größe der Spalte 8, 9 entsprechend verändert. In allen Zwischenstellungen treten Schwankungen des Mischverhältnisses aus den unterschiedlichsten Ursachen auf, sodass die Länge des Dehnelements 12 variieren kann. Längenänderungen des thermostatischen Elements 10 aufgrund von Schwankungen der Mischwassertemperatur wirken sich zuerst auf die Druckfeder 11, und somit auf die Position der Dichtscheibe 7 und die Breiten der Spalte 8 und 9 aus, und greifen damit in das Mischungsverhältnis zwischen Kalt- und Warmwasser ein. Erst wenn die Längenänderung des thermostatischen Elements 10 den Verstellbereich der Dichtscheibe 7 übersteigt, tritt das Dehnelement 12 des thermostatischen Elements 10 gemeinsam mit dem hutartigen Element 26 des Anschlags 13 unter Kompression der Druckfeder 15 in den als Ausgleichsraum 20 fungierenden Hohlraum innerhalb der Zahnwelle 19 ein.

Bei korrekten Zuleitungen verkürzt sich das thermostatische Element 10, wenn die Mischwassertemperatur sinkt, beispielsweise durch sinkende Heißwassertemperatur im Boiler. Dadurch verschiebt sich die Dichtscheibe 7 unter Einwirkung der Druckfeder 11 nach oben, und es vergrößert sich der Heißwassereintrittsspalt 9 und die Menge des zufließenden Heißwassers. Synchron werden der Kaltwassereintrittsspalt 8 und die Menge des zufließenden Kaltwassers verkleinert. Durch die so steigende Mischwassertemperatur verlängert sich das thermostatische Element 10, wodurch sich der Kaltwassereintrittsspalt 8 und die Menge des zufließenden Kaltwassers wieder vergrößert. Auf diese Weise pendelt sich das Mischungsverhältnis über die Druckfeder 11, die Dichtscheibe 7 und die Spalte 8 und 9 entsprechend der vorgewählten Temperatur ein. Bei steigender Mischwassertemperatur ist der Ablauf entsprechend umgekehrt.

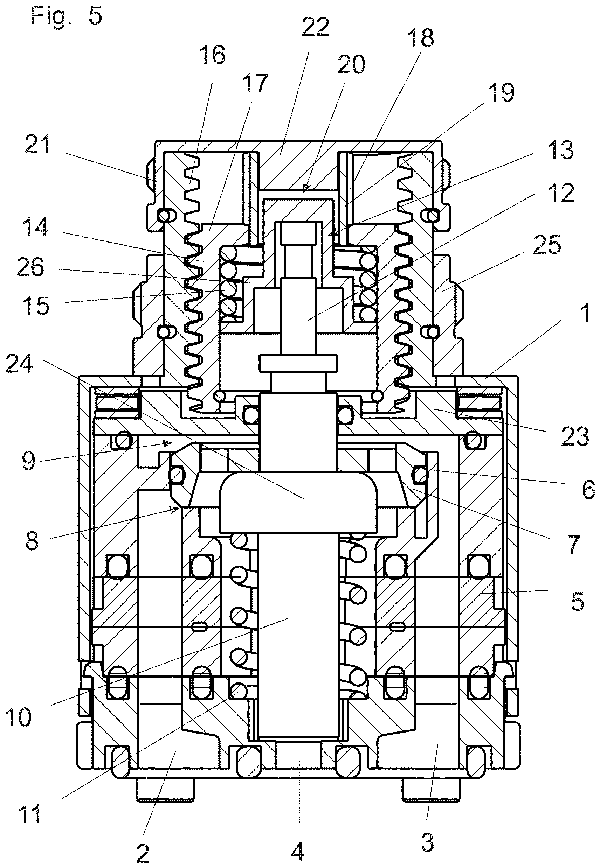

Figur 5 zeigt, dass die Kartusche auch bei vertauschten Kalt- und Heißwasseranschlüssen 2, 3 verwendet werden kann, da sie trotz der vertauschten Leitungen nicht beschädigt wird. Der Eintrittsspalt 8 für Kaltwasser liegt in dieser Ausführung dann an der Unterseite der Dichtscheibe 7 und der Eintrittsspalt 9 an der Oberseite. An der untersten Stellung der Hülse 14, die der Position von Figur 1 entspricht, hat das thermostatische Element 10 seine größte Länge und das hutartige Element 26 des Anschlags 13 ist unter Komprimierung der Druckfeder 15 in den Ausgleichsraum 20 eingetreten. Auch in dieser Position ist kein Spielraum mehr erforderlich, da keine zusätzliche Dehnung durch heißes Wasser auftreten kann. Wird die Hülse 14 über das Temperatureinstellglied 21 verdreht, so bewegt sie sich nach oben, wobei die Druckfeder 15 sich entspannen kann.

Bei vertauschten Zuleitungen verkürzt sich somit das thermostatische Element 10 durch sinkende Mischwassertemperatur. Dadurch verschiebt sich die Dichtscheibe 7 unter Einwirkung der Druckfeder 11 nach oben, und verändert die beiden Spalte 8 und 9. Durch die vertauschten Zuleitungen erhöht sich dabei der Kaltwasserzulauf und es verringert sich der Heißwasserzulauf. Dadurch verkürzt sich das thermostatische Element 10 immer mehr bis zur Minimallänge, sodass nur noch Kaltwasser fließt. Im umgekehrten Fall verlängert sich das thermostatische Element 10 immer weiter, bis nur noch Heißwasser fließt.

## Patentansprüche

1. Mischbatteriekartusche mit einem Gehäuse (1), in dem ein in der Länge veränderbares thermostatisches Element (10) vorgesehen ist, mit einem verdrehbaren Einstellglied (21) für die Temperatur des abfließenden Mischwassers, wobei die Verdrehung des Einstellgliedes (21) einen Anschlag (13) axial verstellt, um den Aufnahmeraum des thermostatischen Elements (10) an die zur gewählten Temperatur des Mischwassers zugehörige Länge anzupassen, wobei der axial verstellbare Anschlag (13) mit dem Einstellglied (21) verdrehbar angeordnet ist, wobei ein Ausgleichsraum (20) für temperaturabhängige Längenschwankungen des thermostatischen Elements (10) vorgesehen ist, **dadurch gekennzeichnet, dass** der Ausgleichsraum (20) in einer mittigen Vertiefung im verdrehbaren Einstellglied (21) ausgebildet ist, in die der Anschlag (13) bei der axialen Verstellung eintritt.

2. Kartusche nach Anspruch 1, in der die Verdrehung des Einstellglieds (21) den Anschlag (13) über ineinandergreifende Innen- und Außengewinde (16, 17) verstellt, **dadurch gekennzeichnet, dass** das Innengewinde (16) im Gehäuse (1) vorgesehen ist, und der mit dem Einstellglied (21) verdrehbare Anschlag (13) das Außengewinde (17) aufweist.

3. Kartusche nach Anspruch 1 oder 2, **dadurch gekennzeichnet, dass** mittig am Einstellglied eine nach unten ragenden Zahnwelle (19) vorgesehen ist, entlang der der Anschlag (13) axial verstellbar ist.

4. Kartusche nach Anspruch 3, **dadurch gekennzeichnet, dass** die Zahnwelle (19) einen nach innen offenen Hohlraum aufweist, der das obere Ende des Aufnahmeraumes des thermostatischen Elementes (10) bildet.

5. Kartusche nach einem der Ansprüche 1 bis 3, **dadurch gekennzeichnet, dass** der Anschlag (13) zwei ineinander bewegliche Teile umfasst, die durch eine Druckfeder (15) gegeneinander verspannt sind.

6. Kartusche nach Anspruch 5, **dadurch gekennzeichnet, dass** der Anschlag (13) eine Hülse (14) mit dem Außengewinde (17) und im Inneren der Hülse (14) eine hutartige zentrale Erhebung (26) aufweist, die bei der axialen Verstellung des Anschlags (13) in eine mittige Vertiefung des Einstellglieds (21) eintritt, wobei sich die Druckfeder (15) an Ringschultern der Hülse (14) und der hutartigen Erhebung (26) abstützt.

## Claims

1. A mixer tap cartridge with a housing (1) in which a variable length thermostatic element (10) is provided, with a rotatable member (21) for setting the temperature of the water mix which flows out, wherein rotation of the setting member (21) axially adjusts an end stop (13) in order to adapt a space for retaining the thermostatic element (10) to the length of the thermostatic element associated with the selected temperature of the water mix, wherein the axially adjustable end stop (13) is disposed so as to be able to be rotated with the setting member (21), wherein a compensation space (20) is provided for temperature-dependent variations in the length of the thermostatic element (10), **characterized in that** the compensation space (20) is formed in a central indentation in the setting member (21) which can be rotated, into which the end stop (13) enters during the axial adjustment.

2. The cartridge according to claim 1, in which the rotation of the setting member (21) adjusts the end stop (13) via interengaging internal threads and external threads (16, 17), **characterized in that** the internal thread (16) is provided in the housing (1), and the end stop (13) which can be rotated with the setting member (21) has the external thread (17).

3. The cartridge according to claim 1 or 2, **characterized in that** a downwardly protruding splined shaft (19) is provided centrally on the setting member, along which splined shaft the end stop (13) can be axially adjusted.

4. The cartridge according to claim 3, **characterized in that** the splined shaft (19) has a cavity which is open towards the bottom and which forms the upper end of the retaining space (20) for the thermostatic element (10).

5. The cartridge according to one of claims 1 to 3, **characterized in that** the end stop (13) comprises two parts which can move inside one another and which are tensed against each other by means of a compression spring (15).

6. The cartridge according to claim 5, **characterized in that** the end stop (13) has a sleeve (14) with an external thread (17) and a hat-like central protrusion (26) in the interior of the sleeve (14) which enters into a central indentation of the setting member (21) during the axial adjustment of the end stop (13), wherein the compression spring (15) is braced on annular shoulders of the sleeve (14) and the hat-like protrusion (26).

## Revendications

1. Cartouche de mitigeur avec un boîtier (1), dans lequel un élément (10) thermostatique à longueur variable est prévu, avec un organe de réglage (21) rotatif pour la température de l'eau mélangée sortante, dans laquelle la rotation de l'organe de réglage (21) ajuste axialement une butée (13) pour adapter l'espace de logement pour l'élément thermostatique (10) à la longueur, associée à la température choisie de l'eau mélangée, de l'élément thermostatique, dans lequel la butée (13) ajustable axialement est disposée de manière à pouvoir tourner avec l'organe de réglage (21), dans lequel un espace de compensation (20) est prévu pour des fluctuations de longueur, dépendant de la température, de l'élément thermostatique (10), **caractérisé en ce que** l'espace de compensation (20) est réalisé dans un renfoncement central dans l'organe de réglage (21) rotatif, dans lequel la butée (13) entre lors de l'ajustement axial.

2. Cartouche selon la revendication 1, dans laquelle la rotation de l'organe de réglage (21) ajuste la butée (13) par l'intermédiaire de filetages intérieur et extérieur (16, 17) s'engrenant les uns dans les autres, **caractérisée en ce que** le filetage intérieur (16) est prévu dans le boîtier (1) et la butée (13) pouvant tourner avec l'organe de réglage (21) présente le filetage extérieur (17).

3. Cartouche selon la revendication 1 ou 2, **caractérisée en ce qu'**est prévu au centre sur l'organe de réglage un arbre denté (19) dépassant vers le bas, le long duquel la butée (13) peut être ajustée axialement.

4. Cartouche selon la revendication 3, **caractérisée en ce que** l'arbre denté (19) présente un espace creux ouvert vers l'intérieur, qui forme l'extrémité supérieure de l'espace de logement de l'élément thermostatique (10).

5. Cartouche selon l'une quelconque des revendications 1 à 3, **caractérisée en ce que** la butée (13) comprend deux parties mobiles l'une dans l'autre, qui sont précontraintes l'une à l'encontre de l'autre par un ressort de pression (15).

6. Cartouche selon la revendication 5, **caractérisée en ce que** la butée (13) présente une douille (14) avec le filetage extérieur (17) et, à l'intérieur de la douille (14), une partie surélevée (26) centrale de type chapeau, qui rentre dans le renfoncement central de l'organe de réglage (21) lors de l'ajustement axial de la butée (13), dans laquelle le ressort de pression (15) est soutenu sur des épaulements annulaires de la douille (14) et de la partie surélevée (26) de type chapeau.
